# EUROPEAN PATENT APPLICATION

(11) **EP 4 764 915 A1**
(43) Date of publication of application: **24.06.2026**
(21) Application number: 24465605.4
(22) Date of filing: 17.12.2024
(51) Int. Cl.: G06F 21/44, H04L 9/32

(54) **METHOD OF AND COMPUTERIZED APPARATUS FOR SECURING A COMPUTING DEVICE, AND KIT-OF-PARTS SYSTEM**

(71) Applicant: Siemens Aktiengesellschaft, 80333 München (DE)
(72) Inventor: The designation of the inventor has not yet been filed
(74) Representative: Siemens Patent Attorneys

(57) **Abstract**

Proposed is a method of securing a manufactured computing device (1) to be performed by a manufacturer thereof and comprising: a) installing, during manufacture of the computing device, a cryptographic device identity record (2) on the computing device, the cryptographic device identity record (2) comprising at least a private key (21) and a certificate (22) certifying a public key (221) corresponding to the private key; b) generating a certificate revocation secret (3) associated with the issued certificate; and c) causing the certificate revocation secret to be transferred to a customer using a transfer method that keeps it separate from the manufactured computing device (1).

Also proposed is a corresponding apparatus; and a kit-of-part-system comprising the computing device and a physical or digital embodiment of the certificate revocation secret.

Revocation of a cryptographic device identity record in case of loss of control over the computing device is facilitated.

## Description

The present invention relates to the field of trusted industrial computing, and more particularly to a method, performed by a manufacturer, of securing a computing device, a computerized apparatus for securing a computing device, and a corresponding kit-of-parts system.

In industrial computing, it is important to ensure the integrity of industrial computing devices that are used to control equipment, plants, machinery and the like. Presence of an industrial computing device that is controlling critical equipment and that is counterfeited or has been tampered with or has been hacked, could have severe and potentially catastrophic consequences.

In order to ensure the integrity and legitimacy of an industrial computing device, a manufacturer may install a cryptographic device identity record, such as an Initial Device Identity, IDevID, on the industrial computing device during its manufacture. The IDevID is designed to provide a trusted and, preferably, immutable identity for the computing device that can serve as a source of trust for secure onboarding, authentication and deriving further cryptographic functionality, such as cryptographic communication. The IDevID may comprise a private key, and a public certificate comprising a public key corresponding to the private key and a signature made by a certificate authority of the manufacturer. At least the private key of the IDevID may be stored on the industrial device such that it can be used for performing cryptographic operations, but cannot be read out. A secure element, such as a TPM or the like, can be used to securely store the private key in this manner. During an automated onboarding of a new industrial computing device, the computing device may use the private key of the IDevID to prove its identity by performing a cryptographic operation, such as using cryptography to generate a response to a challenge. As such, an industrial system into which the industrial computing device is onboarded and which has trust in certificates issued by the certificate authority of the manufacturer can then use the response and the certificate to verify that the industrial computing device possesses the private key and is certified by the manufacturer as being legit (original equipment made by the manufacturer, not counterfeited, not tampered with, not hacked). Such verifications can also be performed later-on during use to verify on-going legitimacy of the industrial computing device in operation.

In order to later deauthorize an industrial computing device, the Certificate Management Protocol, CMP, provides for messages that allow the industrial computing device, using its IDevID, and in particular the private key thereof, to sign a message to the certificate authority of the manufacturer requesting revocation of the certificate, to which the certificate authority responds, for example, by publishing a certificate revocation list, CRL, listing the certificate of the IDevID as being revoked.

However, when the industrial computing device goes out of order, gets lost or is stolen, or is taken over by a hacker, it would also be desirable to revoke the certificate of the IDevID to prevent further onboardings and/or further participation of the industrial computing device in cryptographic communications. However, in such situations, the private key is no longer available. Consequently, CMP cannot be used, and the owner of the industrial computing device currently has no other automated way of requesting revocation of the certificate from the manufacturer. Often, multiple resellers are involved, so that there is no direct business relationship or no direct trust relationship between the owner of the industrial computing device and the manufacturer and the manufacturer's certificate authority, meaning that even manually requesting revocation by humans may be problematic or impossible.

It is one object of the present invention to facilitate revocation of a cryptographic device identity record, such as of an IDevID.

Accordingly, under a first aspect, a computerized method of securing a manufactured computing device is proposed. The proposed method is to be performed by a manufacturer of the computing device and comprises: a) installing, during manufacture of the computing device, a cryptographic device identity record on the computing device, the cryptographic device identity record comprising at least a private key and a certificate certifying a public key corresponding to the private key; b) generating a certificate revocation secret associated with the issued certificate; c) causing the certificate revocation secret to be transferred to a customer using a transfer method that keeps the certificate revocation secret separate from the manufactured computing device.

The certificate revocation secret is transferred to the customer separate from the manufactured computing device. Accordingly, the customer can keep the certificate revocation secret separate from the computing device. Thus, the proposed method provides the advantage that in a case where the customer has lost access to the computing device, such as if the computing device is hacked, lost or sold, the customer can still use the certificate revocation secret to request revocation of the certificate and thereby have the cryptographic device identity record invalidated. As a result, the computing device that has gone astray can no longer be onboarded and can no longer participate in any kind of cryptographic communication that is derived from the cryptographic device identity record as a root of trust. The result is an advantageous hardening of the IT infrastructure of the customer, which may be an Industry 4.0 infrastructure of equipment or plant operated by the customer, against unwanted events such as theft or hacking.

For example, installing the cryptographic device identity record on the computing device may comprise creating the cryptographic device identity record and copying the cryptographic device identity record onto the computing device. Alternatively, said installing may comprise causing the computing device, or a cryptographic portion, such as a secure element, thereof, to generate at least part of the cryptographic device identity record. Installing therefore shall refer to any action that results in the cryptographic device identity record being installed on the computing device.

For example, the public key corresponds to the private key when the public key and the private key form a key pair in the sense of public key cryptography. For example, the private key and the public key may be generated in a singular cryptographic process as a key pair.

For example, the certificate certifying the public key is a certificate that is issued by a certificate authority of the manufacturer of the computing device. More particularly, step a) may comprise issuing the certificate or causing the certificate to be issued. For example, the certificate may be a cryptographic certificate, such as an X.509 certificate.

That is, the identity and legitimacy of the computing device may be verified by verifying that the computing device can use the private key, and verifying that the certificate of the computing device, which comprises the public key corresponding to the private key, is signed by a certificate authority of the manufacturer.

The certificate revocation secret may comprise one or more random numbers or random characters or any other data portion comprising entropy, such that the certificate revocation secret is suitable for being used as a secret password.

For example, step c) may cause transferring a physical embodiment of the certificate revocation secret, such as a printout thereof, and/or may comprise transferring a digital embodiment of the certificate revocation secret, such as a dataset, an encrypted dataset or encrypted communication, or the like.

Transferring the certificate revocation secret separate from the manufactured computing device shall comprise any form of transfer in which the certificate revocation secret is not comprised by, installed on, fixed to, or otherwise inextricably linked with the manufactured computing device. The certificate revocation secret shall be considered to be transferred separate from the manufactured computing device when the certificate revocation secret and the computing device are transferred using different transfer channels, such as e-mail versus shipping, or post versus shipping, and/or when the certificate revocation secret and the computing device are transferred using a same transfer channel, such as shipping, but as a juxtaposition or kit-of parts, and not as single integral part.

For example, the expression "during manufacture" may refer to an action performed while the computing device is manufactured, or may refer to an action performed when the computing device has been manufactured, but has not yet been packaged and shipped. That is, "during manufacture" may refer to an action that is performed on a manufacturing site and not on a customer site.

According to an embodiment, step c) comprises causing printing of a sealed printout of the certificate revocation secret.

Thereby, advantageously, the revocation secret can be protected by being sealed until its use is required. A customer may confirm whether the seal of the printout of the certificate revocation secret is not broken before archiving the printout and before trusting the computing device for onboarding and the like.

For example, techniques that are common in generating PIN or TAN letters for e-banking can be applied to seal the printout. Examples of such sealing techniques that may ensure that the certificate revocation secret remains confidential during transfer and that any tampering attempts are easily detectable may include: laser PIN labels that may obscure the certificate revocation secret under a random black pattern of dots; thermal sealing in which the certificate revocation secret may be printed out on special paper that is then folded and sealed using head; application of a peel-off label adapted to be removed by tearing a perforated tab or pulling off a top layer of a foil label; application of a scratch label comprising a transparent film with an opaque scratch coating that conceals the certificate revocation secret until scratched off; application of a void label, that does not conceal the certificate revocation secret but incorporates a void effect that becomes visible when tampered with, indicating any unauthorized access attempts; double layer labelling in which the certificate revocation secret is printed on a lower label and sealed by an upper label; and eco-friendly paper-based scratch labels, for example.

According to a further embodiment, step c) comprises encrypting the certificate revocation secret and transmitting the encrypted certificate revocation secret to the customer.

In this way, advantageously, the certificate revocation secret and the computing device are transferred over two distinct channels - digital transmission versus physical shipment - to the customer, making sure that the certificate revocation secret arrives at the customer even if the shipment of the computing device is lost or stolen. Accordingly, advantageously, the customer may revoke the certificates of stolen computing devices, rendering them useless to the thieves.

According to a further embodiment, the method further comprises: d) revoking the issued certificate upon receiving a certificate revocation secret that matches with the certificate revocation secret associated with the certificate that was issued in step a).

That is, the proposed method advantageously allows the manufacturer to offer an automated certificate revocation service for the cryptographic device identity records that were installed by the manufacturer. More particularly, this automated certificate revocation service may be offered without the manufacturer having to know or establish an identity of the customer that wishes to have a certificate revoked. Rather, the certificate revocation secret may serve as a means of authenticating whoever wishes to have the certificate revoked. Accordingly, the technical and logistical complexity for offering a certificate revocation service may be reduced. Also, advantageously, the automated certificate revocation service may be used by a customer even when the customer has lost access to the computing device, the certificate of which the customer wishes to revoke.

According to a further embodiment, step b) comprises storing the generated certificate revocation secret in association with a device identifier that identifies the manufactured device and that is comprised in the cryptographic device identity record; and step d) comprises receiving a device identifier together with the received certificate revocation secret and checking if a certificate revocation secret is stored in association with the received device identifier and whether the stored certificate revocation secret matches with the received certificate revocation secret.

The present embodiment proposes one straightforward way of handling a plurality of certificate revocation secrets for a plurality of cryptographic device identity records of a plurality of manufactured computing devices.

It is noted that according to the present embodiment, the digital or physical embodiment of the certification revocation secret may also comprise a digital or physical embodiment of the device identifier.

According to a further embodiment, step b) comprises deriving the certificate revocation secret from a family secret that is generated and stored once for a plurality of computing devices to be manufactured, said deriving comprising applying a secure one-way function to a combination of the family secret and a device identifier that identifies the manufactured device and that is comprised in the cryptographic device identity record; and step d) comprises receiving a device identifier together with the received certificate revocation secret, deriving a certificate revocation secret from the stored family secret and the received device identifier, and checking if the derived certificate revocation secret matches with the received certificate revocation secret.

Accordingly, it is advantageously possible to handle a plurality of certificate revocation secrets for a plurality of cryptographic device identity records of a plurality of manufactured computing devices with lessened storage requirements. For example, according to the present embodiment, it is not necessary to store each certificate revocation secret that was generated; rather, it may suffice to store the family secret once for a plurality of computing devices that are treated as a single family.

The family secret may be a random number or a random character string or any other data portion comprising entropy so that it is suitable for being used as a secret password.

For example, the secure one-way function may be a hash function.

The combination of the family secret and the device identifier may be a concatenation, a juxtaposition, a convolution, an interspersed combination, or any combination of two portions of data.

For example, in step d), said deriving the derived certificate revocation secret is performed using the same technique as said deriving in step b). That is, also in step d), said deriving may comprise applying the same secure one-way function to a combination of the stored family secret and the received device identifier.

According to a further embodiment, generating the certificate revocation secret and/or generating the family secret comprises generating a random number.

Any known technique of generating random secrets can be used, such as pseudo random number generation and/or hardware-based random number generation, hardware-based PIN or TAN generation, and the like. One or more random numbers and/or characters may be generated in this way and may be used as the certificate revocation secret or as the family secret and/or may be used as a seed for a further pseudo-random number generator that is then used to generate the certificate revocation secret and/or the family secret.

According to a further embodiment, step b) comprises securely storing the generated certificate revocation secret or the generated family secret in a production database of the manufacturer.

According to a further embodiment, step a) comprises installing the cryptographic device identity record in a secure element of the computing device.

The secure element may advantageously ensure immutability of the cryptographic device identity record as a whole and may advantageously ensure privacy of the private key.

For example, the secure element may be a hardware element of the computing device that comprises permanent storage for storing cryptographic data - such as the private key - and processing logic configured to use the cryptographic data for performing cryptographic operations. The secure element may be configured such that the cryptographic data can be used for performing the cryptographic operations, but cannot be read out from an external element, such as by software or an operating system that executes on a central processing unit of the computing device.

That is, for example, the secure element may be an element that is configured to protect the private key from being disclosed, but that is configured to use the private key for performing cryptographic operations.

The secure element may be implemented as a system-on-a-chip. For example, , the secure element may be implemented using one or more of a Field Programmable Gate Array, FPGA, a secure cryptoprocessor, or a Trusted Platform Module, TPM.

According to a further embodiment, the cryptographic device identity record is an Initial Device Identity, IDevID, and the certificate is an X.509v3 certificate that conforms to IEEE 802.1AR.

Any embodiment of the first aspect may be combined with any embodiment of the first aspect to obtain another embodiment of the first aspect.

According to a further aspect, the invention relates to a computer program product comprising a program code for executing the above-described method for securing a manufactured computing device when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, there is proposed a computerized apparatus for securing a manufactured computing device, the computerized apparatus being operable by a manufacturer of the computing device, the computerized apparatus comprising: a) a first unit configured to install, during manufacture of the computing device, a cryptographic device identity record on the computing device, the cryptographic device identity record comprising at least a private key and a certificate certifying a public key corresponding to the private key; b) a second unit configured to generate a certificate revocation secret associated with the issued certificate; and c) a third unit configured to cause the certificate revocation secret to be transferred to a customer using a transfer method that keeps the certificate revocation secret separate from the manufactured computing device.

The respective unit may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to a fourth aspect, there is proposed a kit-of-parts system, comprising: a computing device having installed thereon a cryptographic device identity record, the cryptographic device identity record comprising at least a private key and a certificate issued by a manufacturer of the computing device and certifying a public key corresponding to the private key; and a physical or digital embodiment of a certificate revocation secret that is separate from the computing device, the certificate revocation secret being associated with the certificate comprised in the cryptographic device identity record of the computing device.

The embodiments, features and advantages described with reference to the method of the present invention apply mutatis mutandis to the computer program product, to the computerized apparatus and to the kit-of-parts system of the present invention.

Further possible implementations or alternative solutions of the invention also encompass combinations - that are not explicitly mentioned herein - of features described above or be-low with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 schematically illustrates a manufacturing site according to exemplary embodiments;
Fig. 2 shows method steps of a method of securing a computing device according to a first exemplary embodiment;
Fig. 3 schematically illustrates exemplary details of the cryptographic device identity record;
Fig. 4 visualizes a kit-of parts system according to the first exemplary embodiment;
Fig. 5 visualizes contents of a production database according a further development of the first exemplary embodiment; and
Figs. 6A, 6B, 6C and 6D visualize details of a method of securing a manufactured computing device according to a second exemplary embodiment.

In the Figures, like reference numerals designate like or functionally equivalent elements, unless otherwise indicated.

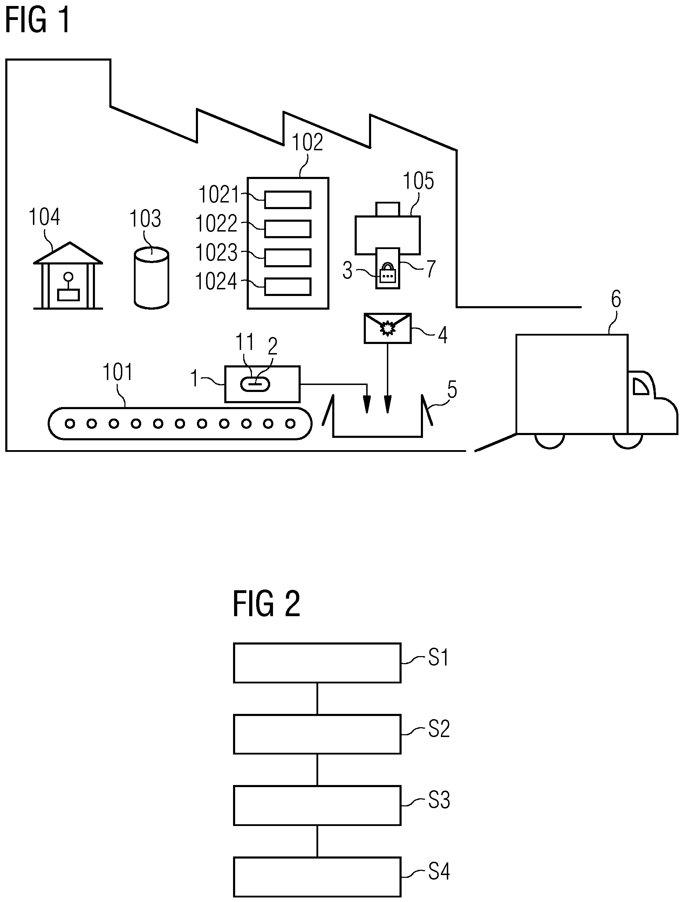

Fig. 1 schematically illustrates a manufacturing site 100 according to exemplary embodiments.

The manufacturing site 100 is operated under control of a hardware manufacturer. The business model of the hardware manufacturer constitutes in manufacturing large amounts of computing devices that are going to be distributed over a supply chain. Customers of the manufacturer may resell the manufactured computing devices to end customers who are unknown to the manufacturer.

The manufacturing site 100 comprises, for example, a conveyor belt 101 on which a computing device 1 under manufacture is conveyed. The computing device 1 has reached the end of the conveyor belt 101, meaning that the basic steps of hardware assembly have been completed in the state that is shown in Fig. 1. The computing device 1 may be, for example, an industrial computing device, such as an IPC, and embedded controller, or the like, that is going to be used by an end customer in an industrial setting for controlling operations of equipment, machinery, plants and the like. The manufacturing site 100 further comprises a production server 102, a production database 103, a certificate authority 104 and a printer 105, the use and function of which will be described below. It will be understood that components of the manufacturing site 100, such as conveyor belt 101, production server 102, production database 103, certificate authority 104, and printer 105, and further non-shown robotic equipment, may be communicably connected using a (non-shown) wired or wireless network such that these components can communicate with each other.

Fig. 2 shows method steps of the proposed method of securing the computing device 1 according to a first exemplary embodiment. Reference will be made to Fig. 2 and Fig. 1.

The method visualized in Fig. 2 is performed by the production server 102 (example of a claimed computerized apparatus), for example by running a computer program product that comprises instructions that cause the production server 102 to form functional units 1021-1024 that are configured to perform the respective method steps shown in Fig. 2 and described hereinbelow. The proposed method is performed during or at the end of manufacture of the computing device 1, such as at the stage shown in Fig. 1 when the basic steps of hardware assembly are completed.

That is, in step S1 of the proposed method, the first unit 1021 of the production server 102 installs a cryptographic device identity record 2 in a storage area of the computing device 1 under manufacture. In the example shown, the storage area is a secure element 11. The secure element 11 may be a device that uses hardware, such as a FPGA, a cryptoprocessor or a TPM, to enable use of the cryptographic device identity record 2 for cryptographic operations without allowing read-out of or otherwise exposing at least a private key comprised by the cryptographic device identity record 2. That is, at least the private key comprised by the cryptographic device identity record 2 cannot be read out from the secure element 11.

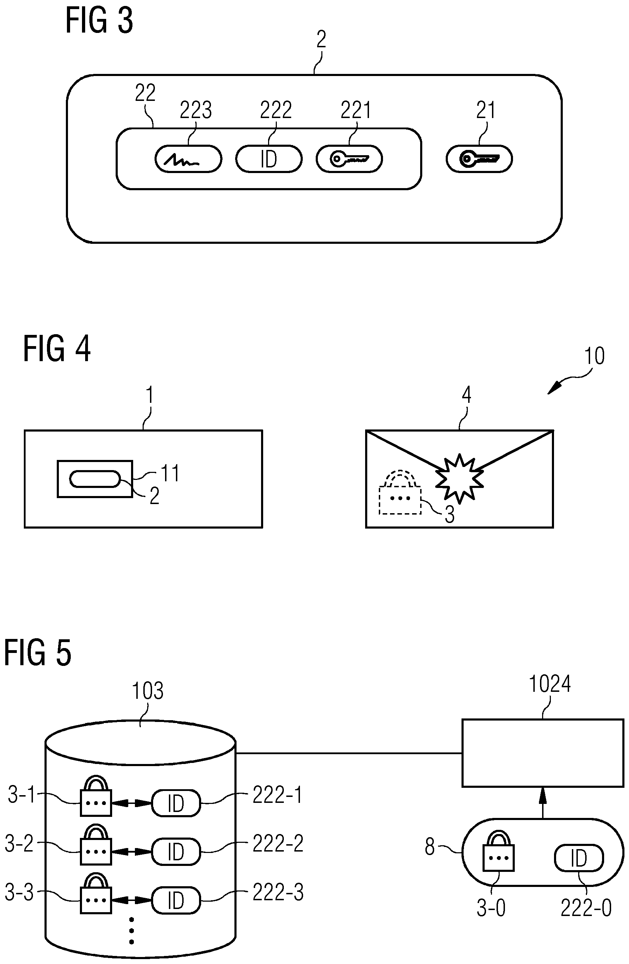

Fig. 3 schematically illustrates exemplary details of the cryptographic device identity record 2. The cryptographic device identity record 2 according to the shown example comprises a private key 21 and a public certificate 22. The public certificate 22 in turn comprises a public key 221 that corresponds to the private key 21. That is, the private key 21 and the public key 221 together form a public key pair in the sense of public key cryptography. The public key 221 can be shared publicly and can be used to encrypt data that only the holder of the private key 21, i.e. the secure element 11, can decipher, for example. Also, for example, the private key 21 can be used by the secure element 11 to digitally sign arbitrary date such that everyone can use the public key 221 to confirm that the arbitrary data has been digitally signed by the holder of the private key 21.

Furthermore, the public certificate 22 comprises a device identifier 222. The device identifier 222 uniquely identifies the computing device 1 (Fig. 1) to which the cryptographic device identity record 2 belongs. The device identifier 222 may comprise one or more of a distinguished name, a MAC address, a serial number, or any other identifier uniquely identifying the specific computing device 1 (Fig. 1). Furthermore, the public certificate 22 comprises a digital signature 223 of the contents of the public certificate 22, i.e., of the public key 221 and the device identifier 222. The digital signature 223 is a cryptographic signature made by the certificate authority 104 (Fig. 1) of the manufacturer using a private key of the certificate authority 104.

With reference to Fig. 1, 2 and 3, it is noted that in step S1, "installing the cryptographic device identity record 2" may comprise the first unit 1021 creating the entire cryptographic device identity record 2 and copying it into the storage area, such as the secure element 11 or a ROM, PROM, EPROM or flash memory, of the computing device 1 under manufacture.

However, "installing the cryptographic device identity record 2" may, for example, also comprise the first unit 1021 causing the computing device 1, or the secure element 11 thereof, to create at least some of the elements of the cryptographic device identity record 2. Merely as one example, if the computing device 1 comprises the secure element 11, the first unit 1021 may assign a device identifier 222 to the secure element 11 and instruct the secure element 11 to generate the private key 21 based on a random seed that the secure element 11 may have or that may be provided to the secure element 11 by the first unit 1021 of the production server 102. After generating the private key 21, the secure element 11 may transmit a certificate signing request (not shown) to certificate authority 104. The certificate authority 104 may respond to receiving the certificate signing request by transmitting the public certificate 22 to the secure element 11. The secure element 11 then stores the public certificate 22 comprising the signature 223 of the certificate authority 104, the device identifier 222 and the public key 221 such that it can be read out from the secure element 11, and stores the private key 21 that it has generated such that it can be used by the secure element 11 for performing further cryptographic operations, but such that it cannot be read out from the secure element 11. The procedure described also constitutes one example of the first unit 1021 "installing the cryptographic device identity record 2" on the computing device 1.

Merely as one example, the cryptographic device identity record 2 may be an I DevID record, and the certificate 22 comprised by the IDevID record 2 may be a X.509v3 certificate that conforms to IEEE 802 AR.

Optionally, after having installed the cryptographic device identity record 2 in the secure element 11 of the computing device 1, the first unit 1021 of the production server 102 may store information about the manufactured computing device 101, such as the device identifier 222, in the production database 103. This optional step will be described in more detail with regards to preferred further developments later.

With further reference to Fig. 1 and Fig. 3, the manufactured computing device 1 comprises a secure element 11 in which the cryptographic device identity record 2 comprising the private key 21 and the public certificate 22 having the digital signature 223 made by the certificate authority 104 of the manufacturer is installed. Therefore, the computing device 1 can be onboarded automatically in a (non-shown) industrial system of a customer. Therein, the computing device 1 can use the private key 21 to perform cryptographic operations that demonstrate that it indeed possesses the private key 21 that corresponds to its public certificate 22, such as by correctly signing challenge data or by successfully decrypting challenge data. Since the public certificate 22 has the digital signature 223 made by the certificate authority 104 of the manufacturer, advantageously, the industrial system of the customer can verify that the computing device 1 is really manufactured by the manufacturer, is not a counterfeit, and has not been tampered with. Following such a verification, the industrial system can automatically onboard the computing device 1. Furthermore, also at a later stage during operation, the industrial system of the customer can repeat similar verification operations to make sure that the computing device 1 still enjoys the manufacturer's trust.

With further reference to Fig. 1, Fig. 2, and Fig. 3, in step S2, the second unit 1022 of the production server 102 generates a certificate revocation secret 3 that is associated with the issued public certificate 22. Merely as one example, the certificate revocation secret 3 may be, or may be based on, a random number or a pseudo-random number generated by the second unit 1022 using a physical source of randomness and/or a pseudo-random generator. Merely as one example, the certification revocation secret 3 may be associated with the issued public certificate 22 by storing, in the production data base 103, the certificate revocation secret 3, in association with the device identifier 222 comprised in the issued public certificate 22. However, this is merely one example, and other ways of associating the certificate revocation secret 3 with the public certificate 22 will be described later. More generally speaking, the fact that the certificate revocation secret 3 is associated with the issued public certificate 22 shall mean that the certificate revocation secret 3 can be used, by a customer who has purchased the computing device 1, to authenticate with the manufacturer (such as the production server 102 operated by the manufacturer) and have the public certificate 22 revoked, as will be described in more detail hereinbelow.

With further reference to Fig. 1, Fig. 2, and Fig. 3, in step S3, the third unit 1023 of the production server 103 causes the printer 105 and/or optional non-shown printing and/or sealing equipment to print a sealed printout the certificate revocation secret 3. That is, printer 105 is caused to print the certificate revocation secret 3 on a sheet 7. The sheet 7 having the certificate revocation secret 3 printed thereon is put into envelope 4 and envelope 4 is sealed. Thus, in the present exemplary embodiment, the sealed envelope 4 containing sheet 7 having the certificate revocation secret 3 printed thereon is considered to constitute a physical embodiment, i.e. a sealed printout 4, of the certificate revocation secret 3.

Furthermore, and also in step S3, the third unit 1023 of the production server 103 causes the sealed printout 4 of the certificate revocation secret 3 to be put into a shipping container 5 together with the manufactured computing device 1 on which the cryptographic device identity record 2 comprising the public certificate 22 associated with the certificate revocation secret 3 is installed. The third unit 1023 then causes the shipping container 5 to be shipped, e.g. using lorry 6, to a reseller and/or to an end customer. It is noted that inside the shipping container 5, the sealed printout 4 of the certificate revocation secret 3 is bundled with, but is separate from, the computing device 1. In this way, when the shipping container 5 is transferred to a reseller and ultimately to an end customer, this constitutes a transfer method that keeps the certificate revocation secret 3 separate from the computing device 1.

It is also noted that said steps of causing the transfer in step S3 may be fully-automated steps, in which the third unit 1023 causes non-shown robotic equipment to carry out the placing of the computing device 1 and the sealed envelope 4 into the shipping container 5, and to carry out sealing, labelling on loading the sealed and labelled shipping container 5 onto the lorry 6. However, as an alternative thereto, it is also conceived that some of the described steps of transferring the industrial computing device 1 and the sealed envelope 4 comprising the certificate revocation secret 3 to the reseller and ultimately to the customer may be performed by humans that are directed to perform the required actions by the third unit 1023, for example by the third unit 1023 causing non-shown display devices, such as smart devices carried by human operators, to display directions directing the humans to perform the respective above-mentioned jobs.

Fig. 4 visualizes a kit-of parts system 10 comprising the computing device 1 in which the cryptographic device identity 2 has been installed according to step S1 described above, and further comprising a physical embodiment of the certificate revocation secret 3 generated in step S2 described above, i.e. the sealed envelope 4 comprising the printout of the certificate revocation secret 3 that was printed out in step S3 described above, and which is separate from the industrial computing device 1. The kit-of-parts system 10 may correspond to the contents of the shipping container 5 in Fig. 1 after steps S1 to S3 have been performed.

A customer that buys the kit-of-parts system 10 from the manufacturer or from a reseller can onboard the industrial computing system 1 in an industrial system (not shown) at the customer's site. Therein, as described above in detail, the industrial system of the customer's site can automatically verify, by having the computing device 1 authenticate itself using the cryptographic device identity record 2, that the computing device 1 is legit, is an original piece of equipment manufactured by the manufacturer, and has not been tampered with. The onboarded computing device 1 can then use the cryptographic device identity record 2 as a root of trust from which further certificates or other cryptographic functions may be derived.

Furthermore, the customer can store the sealed envelope 4 comprising the printout of the revocation secret 3, which constitutes a physical embodiment of the revocation secret 3, in an archive or the like such that the physical embodiment of the certificate revocation secret 3 remains separate from the computing system 1 that is onboarded in the industrial system (not shown) of the customer.

In this way, advantageously, at a later time, if the computing device 1 is sold off, is stolen, or has been subjected to a hacking attack, the customer may use the certificate revocation secret 3 to have the certificate 22 of the industrial computing device 1 to be revoked, even in a situation where the customer as lost access to the computing device 1.

Specifically, with further reference to Figs. 1, 2, 3 and 4, the customer can transmit the certificate revocation secret 3 to the fourth unit 1024 of the production server 102. In response to receiving the certificate revocation secret 3, the fourth unit 1024 performs step S4 and checks whether the received certificate revocation secret 3 matches with the certificate revocation secret 3 that was generated in step S2 and is associated, in production database 103, with the public certificate 22 that was issued in step S1. If the received and the stored certificate revocation secrets 3 match, the fourth unit 1024 revokes the issued public certificate 22. Merely as one example, the fourth unit 1024 may cause the certificate authority 104 to issue a certificate revocation list, CRL, that comprises information about the revoked public certificate 22. As a result, following the revocation of the public certificate 22, the computing device 1 of which the customer has lost control through theft, sale, or hacking, will no longer be able to be onboarded in any industrial system and/or will no longer be able to perform cryptographic operations inside the customer's industrial system in which it is currently onboarded.

That is, by having a physical embodiment 4 of the certificate revocation secret 3 that was transmitted separate and that the customer has kept separate from the computing device 1, the customer is advantageously able to request revocation of certificate 22 of the cryptographic device identity record 2 of the computing device 1 even when the customer has lost control of the computing device 1 and even when there is no direct business relationship between the customer (which may have purchased the computing device 1 from a reseller) and the manufacturer.

In this way, advantageously, revocation of the certificate 22 of the cryptographic device identity record 2 is facilitated.

Fig. 5 visualizes contents of the production database 103 according a further development of the first exemplary embodiment. Reference will be made to Fig. 5, Fig. 2 and Fig. 1.

It will be understood that the manufacturer can use the manufacturing site 100 to manufacture a large quantity of, and different types of, computing devices 1. Therefore, according to the present further development, in step S2, the second unit 1022 stores each generated certificate revocation secret 3-1, 3-2, 3-3, .... for each manufactured computing device 1 in association with the respective device identifier 221-1, 222-2, 222-3, of the respective manufactured computing device 1. In step S4, the customer transmits, and the fourth unit 1024 receives a certificate revocation request 8 that comprises at least a certificate revocation secret 3-0 and a device identifier 222-0 associated with a cryptographic device identity record 2 of a computing device 1 the certificate 22 (Fig. 3) of which is requested to be revoked. In response to receiving the revocation request 8, the fourth unit 1024 of the production server 102 checks if one of the device identifiers 222-1, 222-2, 222-3 stored in the production database 103 matches with the received device identifier 222-0 of the certificate revocation request 8. If yes, for example, if device identifier 222-2 matches, the fourth unit 1024 checks whether the received certificate revocation secret 3-0 of the certificate revocation request 8 matches with the certificate revocation secret 3-2 that is associated with the matching device identifier 222-2. If yes, the fourth unit 1024 causes the certificate authority 104 to revoke the certificate 22 (Fig. 3) that is associated with the matching device identifier 222-0, 222-2. It is noted that the certification authority 104 may comprise a database of its issued certificates and can therefore use the device identifier 222-0 to locate the proper certificate 22 (Fig. 3) that is to be revoked, and to publish a corresponding CRL.

With reference to Fig. 5, Fig. 3 and Fig. 1, it is noted that in the present further development, the customer needs to know the device identifier 222-0 of the computing device 1 that was lost, stolen or hacked, in addition to the revocation secret 3-0 associated with the certificate 22 of said computing device 1. The customer may know the device identifier 222-0 from its own ERP system or the like. However, in order to support the customer, in this case, the sheet 7 may optionally also comprise a printout of the device identifier 222, 222-0, in addition to a printout of the revocation secret 3, 3-0. If this is the case, the physical embodiment of the certificate revocation secret, i.e. the sealed envelope 4, that is transferred to the customer separate from the computing device 1 and can be kept by the customer separate from the computing device 1 may advantageously comprise all information that is necessary for creating the certificate revocation request 8.

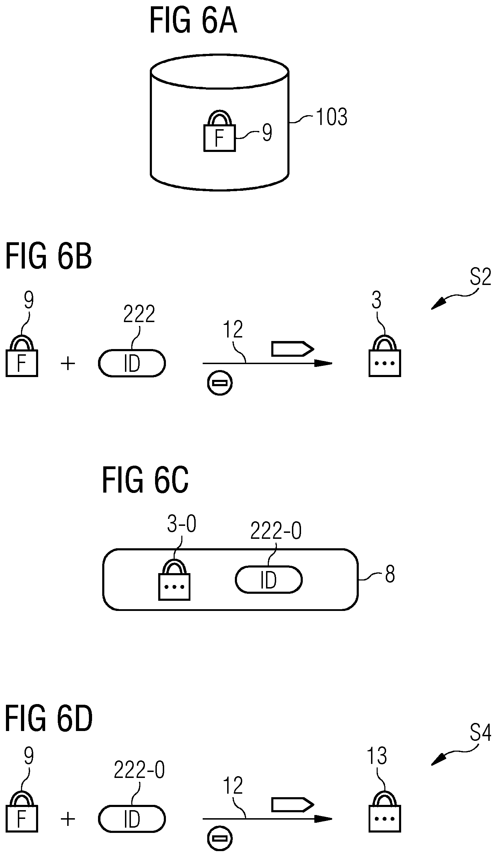

Figs. 6A-6D visualize details of the method of securing a manufactured computing device 1 according to a second exemplary embodiment. More specifically, Fig. 6A shows contents of the production database 103, Fig. 6B shows details of method step S2, Fig. 6C shows a certificate revocation request 8, and Fig. 6D shows details of method step S4, all according to the second exemplary embodiment. The second exemplary embodiment is based on the first exemplary embodiment. Like elements are designated with like reference signs, the description focusses on the differences, and redundant descriptions are omitted. Reference will be made to Figs. 6A-D in conjunction with Fig. 2 and Fig. 1.

The method of the second exemplary embodiment differs from the method of the first exemplary embodiment in the way in which the revocation secret 3 is generated in step S2 and in which matching of the received revocation secret 3-0 is performed in step S4.

That is, when step S2 is executed for the first time, at first, the second unit 1022 generates a family secret 9. The family secret 9 and the method of its generation may be similar to the revocation secret 3 and the method of its generation in the first exemplary embodiment. For example, the family secret 9 may be a random number or may be generated based on a random number. The family secret 9 will be used to derive individual revocation secrets 3 (similar to 3-1, 3-2, 3-3 in Fig. 5) for a plurality of manufactured computing devices 1 belonging to a same computing device family. The generated family secret 9 is stored in the production database 103, as shown in Fig. 6A.

At each execution of step S2, i.e. at the first execution after the family secret 9 has been generated, as well as in each subsequent execution of step S2 when the family secret 9 is already stored in the production database 103, as illustrated in Fig. 6B, the second unit 1022 derives the respective certificate revocation secret 3 from the stored family secret 9 by applying a secure one-way function 12, such as a hash function, to a combination, such as a concatenation, of the family secret 9 and the device identifier 222 of the computing device 1 for which the certificate revocation secret 3 is generated. The secure one-way function 12 has the property that it is impossible or at least computationally prohibitively difficult to derive the family secret 9 based on knowledge of the generated certificate revocation secret 3.

Correspondingly, during execution of step S4, when a certificate revocation request 8 comprising a device identifier 222-0 and a revocation secret 3-0 as shown in Fig. 6C is received, the fourth unit 1024 derives, in the way shown in Fig. 6D, a derived certificate revocation secret 13 in the same manner by applying the secure one-way function 12 to a combination of the family secret 9 and the received device identifier 222-0. The fourth unit 1024 then determines whether the received certificate revocation secret 3-0 matches with the derived certificate revocation secret 13, which is assumed to be a certificate revocation secret associated with one of the issued certificates 22 (Fig. 3), i.e. with one of the plurality of manufactured computing devices 1 of the same family. If a match is determined, the fourth unit 1024 causes the certificate authority 104 to revoke the certificate 22 (Fig. 3) for device identifier 222-0.

Further functions, features and advantages of the second exemplary embodiment are similar to the functions and advantages of first exemplary embodiment or its further developments.

According to the second exemplary embodiment, individual certificate revocation secrets 3, 13 can be derived by hashing a combination of the family secret 9 and the corresponding device identifier 222, 222-0. Thus, advantageously, it is not necessary to store, in production database 103, an individual revocation secret 3 for each manufactured computing device 1, but it suffices to only store the family secret 9. As such, storage space requirements and bookkeeping requirements are advantageously reduced.

Although the present invention has been described in accordance with preferred exemplary embodiments, it is obvious for the person skilled in the art that modifications are possible in all embodiments.

The exemplary embodiments describe that the computing device 1 comprises a secure element 11 in which the cryptographic device identity record 2 is installed. However, the secure element 11 is optional, and in some scenarios, where the supply chain is secured by other means, it may also suffice to install the cryptographic device identity record 2 in an unprotected storage area, such as in a ROM, PROM, EEPROM or flash memory of the computing device 1 under manufacture. However, preferably, but not necessarily, the storage area is at least an immutable read-only storage area, such as a ROM.

As an example for a physical embodiment of the certificate revocation secret 3, a sealed envelope 4 comprising a printout of at least the certificate revocation secret 3 on a sheet 7 was described. However, other methods of creating a sealed printout are also envisioned, such as, for example, the printed certificate revocation secret 3 on the sheet 7 could be sealed directly on the sheet 7 using techniques that are known from PIN letters sent by banks to e-banking or credit card customers. In this case, the sheet 7 comprising the sealed printed certificate revocation secret 3 constitutes the sealed printout 7 of the certificate revocation secret 3, and said sheet 7 constituting the sealed printout 7 could be put into a simple envelope without the envelope having to be sealed, for example, or no envelope needs to be used at all.

The exemplary embodiments show that the computing device 1 having the cryptographic device identity record 2 installed thereon and the sealed printout 4 are placed together into the same shipping container 5. However, it is also envisioned that the sealed envelope 4 could be mailed to the customer by post, separate from and independently of shipping the computing device 1 in the shipping container 5.

Furthermore, it is not necessary to have a physical embodiment of the certificate revocation secret 3. The inventors have also considered using a digital embodiment of the certificate revocation secret. For example, where there is a communication channel, preferably a secure communication channel, between the manufacturer and the first reseller, the third unit 1023 of the production server 102 could also, for example, encrypt the certificate revocation secret 3 and transmit the encrypted certificate revocation secret 3 to the customer over the communication channel. In this scenario, the encrypted communication comprising the certificate revocation secret 3 is considered to be a digital embodiment of the certificate revocation secret 3, and a combination of such a digital embodiment of the certificate revocation secret 3 with the computing device 1 on which the corresponding cryptographic device identity secret 2 having the corresponding certificate 22 installed is also considered to form a kit-of-parts system 10.

The shown separate components, such as conveyor belt 101, production server 102, production database 103, certificate authority 104, and printer 105 of the manufacturing site 100 are merely described by way of example to facilitate understanding, and the described functionality of the manufacturing site 100 could also be implemented using additional or alternative other components, and the described functionality could be distributed over more or fewer than the described components. Merely as an example, the functionality of one or both of the certificate authority 104 and the production database 103 could also be integrated into the production server 102. Alternatively, as another example, part or all of the functionality of production server 102, production database 103, and certificate authority 104, could be distributed over a distributed computing system, such as a cloud, or the like.

The second exemplary embodiment described a single family secret 9, but it will be appreciate that more than one family secret 9 may be stored in the production database 103 for different families of computing devices 1. In this case, in step S4, the received device identifier 222-0 could be combined with each of the plurality of family secrets 9 to derive a respective derived certificate revocation secret 13, and each of the derived certificate revocation secrets 13 could be compared to the received certificate revocation secret 3-0 until a match is found. Alternatively, the received device identifier 222-0 could also comprise a family identifier identifying the family the corresponding computing device 1 belongs to. In this case, the family identifier can be used to identify which of the family secrets 9 stored in the production database 103 is to be used for combining, hashing and matching in step S4.

It is noted that the production database 103, or at least portion of the production database 103 in which the certification revocation secrets 3 of the first exemplary embodiment or the family secrets 9 of the second exemplary embodiment are stored, may advantageously be a secure database that uses at least authentication and preferably cryptography, such as encryption, to safeguard the stored certificate revocation secrets 3 and/or family secrets 9 from unauthorized access.

In another scenario, the certification revocation secret is generated during an onboarding of the computing device (1) into the industrial system, e.g., using a Bootstrapping Remote Secure Key Infrastructure according to IETF RFC BRSKI (RFC8995). The certificate revocation secret (3) is transferred to the customer applying procedures of the onboarding environment, e.g., BRSKI. Alternatively, the certificate revocation secret (3) is transferred to the customer via a central engineering environment (e.g., TIA portal) for automating industrial processes like device integration or via a digital platform for ordering and distributing technical information of a manufacturer related to the computing device (e.g., an industry mall). This embodiment provides an automated digital distribution of the certificate revocation secret (3) reducing the manual effort for transferring it to the customer.

Independent of the grammatical term usage, such as of terms like "manufacturer", "customer", "operator" and the like, individuals with male, female or other gender identities are included within the term.

### List of Reference numerals

- 1: computing device
- 2: cryptographic device identity record
- 3: certificate revocation secret
- 3-0: received certificate revocation secret
- 3-1: stored certificate revocation secret
- 3-2: stored certificate revocation secret
- 3-3: stored certificate revocation secret
- 4: sealed envelope
- 5: shipping container
- 6: lorry
- 7: sheet
- 8: certificate revocation request
- 9: family secret
- 10: kit-of-parts system
- 11: secure element
- 12: secure one-way function
- 13: derived certificate revocation secret
- 21: private key
- 22: public certificate
- 100: manufacturing site
- 101: conveyer belt
- 102: production server
- 103: production database
- 104: certificate authority
- 105: printer
- 221: public key
- 222: device identifier
- 222-0: received device identifier
- 222-1: stored device identifier
- 222-2: stored device identifier
- 222-3: stored device identifier
- 223: signature
- 1021: first unit
- 1022: second unit
- 1023: third unit
- 1024: first unit
- S1-S4: method steps

## Claims

1. A computerized method of securing a manufactured computing device (1), the method to be performed by a manufacturer of the computing device (1), the method comprising:
a) installing (S1), during manufacture of the computing device (1), a cryptographic device identity record (2) on the computing device (1), the cryptographic device identity record (2) comprising at least a private key (21) and a certificate (22) certifying a public key (221) corresponding to the private key (21);
b) generating (S2) a certificate revocation secret (3) associated with the issued certificate (22); and
c) causing (S3) the certificate revocation secret (3) to be transferred to a customer using a transfer method that keeps the certificate revocation secret (3) separate from the manufactured computing device (1).

2. The method according to claim 1,
wherein step c) comprises causing printing of a sealed printout (7, 4) of the certificate revocation secret (3).

3. The method according to claim 1 or 2,
wherein step c) comprises encrypting the certificate revocation secret (3) and transmitting the encrypted certificate revocation secret (3) to the customer.

4. The method according to any one of claims 1 to 3,
further comprising:
d) revoking (S4) the issued certificate (22) upon receiving a certificate revocation secret (3-0) that matches with the certificate revocation secret (3) associated with the certificate (22) that was issued in step a).

5. The method according to claim 4,
wherein:
step b) comprises storing the generated certificate revocation secret (3-1, 3-2, 3-3) in association with a device identifier (222-1, 222-2, 222-3) that identifies the manufactured device (1) and that is comprised in the cryptographic device identity record (2); and
step d) comprises receiving a device identifier (222-0) together with the received certificate revocation secret (3-0) and checking if a certificate revocation secret (3-1, 3-2, 3-3) is stored in association with the received device identifier (222-0) and whether the stored certificate revocation secret (3-1, 3-2, 3-3) matches with the received certificate revocation secret (3-0).

6. The method according to claim 4,
wherein:
step b) comprises deriving the certificate revocation secret (3) from a family secret (9) that is generated and stored once for a plurality of computing devices (1) to be manufactured, said deriving comprising applying a secure one-way function (12) to a combination of the family secret (9) and a device identifier (222) that identifies the manufactured device (1) and that is comprised in the cryptographic device identity record (2); and
step d) comprises receiving a device identifier (222-0) together with the received certificate revocation secret (3-0), deriving a certificate revocation secret (13) from the stored family secret (9) and the received device identifier (222-0), and checking if the derived certificate revocation secret (13) matches with the received certificate revocation secret (3-0).

7. The method according to any one of claims 1 to 6,
wherein generating the certificate revocation secret (3) and/or generating the family secret (9) comprises generating a random number.

8. The method according to any one of claims 1 to 7,
wherein step b) comprises securely storing the generated certificate revocation secret (3) or the generated family secret (9) in a production database (103) of the manufacturer.

9. The method according to any one of claims 1 to 8,
wherein step a) comprises installing the cryptographic device identity record (2) in a secure element (11) of the computing device (1),

10. The method according to any one of claims 1 to 9,
wherein the cryptographic device identity record (2) is an Initial Device Identity, IDevID, and the certificate (22) is an X.509v3 certificate that conforms to IEEE 802.1AR.

11. A computer program product comprising instructions which, when the program is executed by at least one computer (102), cause the computer (102) to carry out the method according to claims 1 to10.

12. A computerized apparatus (102) for securing a manufactured computing device (1), the computerized apparatus (102) being operable by a manufacturer of the computing device (1), the computerized apparatus (102) comprising:
a) a first unit (1021) configured to install, during manufacture of the computing device (1), a cryptographic device identity record (2) on the computing device (1), the cryptographic device identity record (2) comprising at least a private key (21) and a certificate (22) certifying a public key (221) corresponding to the private key (21);
b) a second unit (1022) configured to generate a certificate revocation secret (3) associated with the issued certificate (22); and
c) a third unit (1023) configured to cause the certificate revocation secret (3) to be transferred to a customer using a transfer method that keeps the certificate revocation secret (3) separate from the manufactured computing device (1).

13. A kit-of-parts system (10), comprising:
- a computing device (1) having installed thereon a cryptographic device identity record (2), the cryptographic device identity record (2) comprising at least a private key (21) and a certificate (22) issued by a manufacturer of the computing device (1) and certifying a public key (221) corresponding to the private key (21); and
- a physical or digital embodiment of a certificate revocation secret (3) that is separate from the computing device (1), the certificate revocation secret (3) being associated with the certificate (22) comprised in the cryptographic device identity record (2) of the computing device (1).
